# EUROPEAN PATENT APPLICATION

(11) **EP 3 663 118 A1**
(43) Date of publication of application: **10.06.2020**
(21) Application number: 18210198.0
(22) Date of filing: 04.12.2018
(51) Int. Cl.: B60K 7/00, B60K 17/14, F16H 57/021

(54) **TRANSMISSION ARRANGEMENT FOR A DRIVE SYSTEM OF A VEHICLE**

(71) Applicant: AVL MTC Motortestcenter AB, 46138 Trollhättan (SE)
(72) Inventor: ABERG, Magnus, 46191 TROLLHÄTTAN (SE); SETTY, Roopesh, 41301 GÖTEBORG (SE)
(74) Representative: Babeluk, Michael

(57) **Abstract**

A transmission arrangement (1) has a first gear (10) for a first powerflow path (A) and a second gear (20) for a second power flow path (B). Each of the first gear (10) and second gear (20) comprises an input shaft (11, 21), an output shaft (12, 22), and at least one intermediate shaft (13, 23), wherein the input shaft (11, 21) and the intermediate shaft (13, 23) are drive connected via a input-side gear stage (14, 24) and wherein the intermediate shaft (13, 23) and the output shaft (12, 22) are drive connected via an output-side gear stage (15, 25). The first input shaft (11) and the first output shaft (12) are arranged in a first section (16) of the casing (2), the second input shaft (21) and the second output shaft (22) are arranged in a second section (26) of the casing (2).

The casing (2) of the transmission arrangement (1) comprises a center plate (3) which is arranged in the center section (5) between the first section (16) and the second section (26) of the casing (2), wherein the center plate (3) separates the first power flow path (A) of the first gear (10) and the second power flow path (B) of the second gear (20) from each other.

## Description

The present invention relates to a transmission arrangement for a drive system of a vehicle, especially of an electric vehicle, with a casing including a first gear for a first powerflow path and a second gear for a second power flow path, wherein
- the first gear comprises a first input shaft, a first output shaft, and at least one first intermediate shaft, wherein the first input shaft and the first intermediate shaft are drive connected via a first input-side gear stage and wherein the first intermediate shaft and the first output shaft are drive connected via a first output-side gear stage, the first input shaft and the first output shaft being arranged in a first section of the casing,
- the second gear comprises a second input shaft, a second output shaft and at least one second intermediate shaft, wherein the second input shaft and the second intermediate shaft are drive connected via a second input-side gear stage and wherein the second intermediate shaft and the second output shaft are drive connected via a second output-side gear stage, the second input shaft and the second output shaft being arranged in a second section of the casing,
- wherein preferably the first input shaft and the second input shaft on the one hand and the first output shaft and the second output shaft on the other hand are arranged coaxially in line, and
- wherein preferably the first input shaft and the second input shaft and/or the first output shaft and the second output shaft are arranged symmetrically with respect to a symmetry plane being arranged in a center section of the transmission arrangement normal to at least one of the shafts.

The EP 2 623 356 1 describes a drive device for a vehicle with a first electric motor and a second electric motor. Each of said electric motors drives an axle of the vehicle via a power transmission line.

The EP 2 490 911 B1 discloses an electric axle for a motor vehicle having two electric machine arrangements which are arranged in an essentially mirror-inverted fashion with respect to each another. Each of the electric machines is connected via a gearbox to at least one drive shaft which can be connected to a driven shaft of the motor vehicle. The gearboxes are arranged between the electric machines and the wheels of the vehicle. The electric machines and the reduction gearing of the gearboxes are arranged coaxially. The US 5,419,406 A discloses a similar drive system.

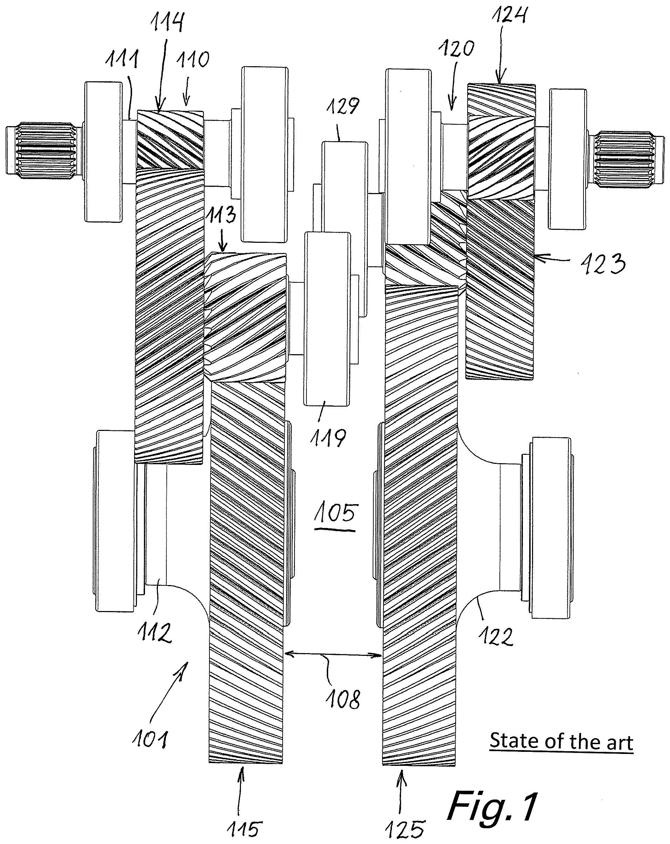

Fig. 1 shows a so called back-to-back transmission 101 arrangement according to the state of art with a first gear 110 and a second gear 120, wherein each of the gears 110, 120 comprises an input shaft 111, 121, an output shaft 112, 122 and an intermediate shaft 113, 123. The bearings 119, 129 of the intermediate shafts 113, 123 are arranged between the first gear 110 and the second gear 120 causing a lost space 108 between the first gear 110 and the second gear 120.

It is an object of the present invention to provide a compact transmission arrangement for a drive system of a vehicle which allows a narrower design.

According to the present invention, the object is achieved in that the casing of the transmission arrangement comprises a center plate which is arranged in the center section between the first section and the second section of the casing, wherein the center plate separates the first power flow path and the second power flow path from each other.

Preferably the central plate is a partition wall which separates the first section from the second section.

According to an embodiment of the invention the center plate comprises at least one passage opening for receiving an intermediate shaft, wherein preferably the center plate comprises a first passage opening for receiving the first intermediate shaft and a second passage opening for receiving the second intermediate shaft. The diameters of the preferably circular passage openings are slightly larger than the diameters of the intermediate shafts.

The intermediate shafts are arranged axially staggered in the first and second sections. This means that the first intermediate shaft is arranged not only in the first section of the casing, but also in the second section of the casing and penetrates the central plate through the first passage opening. Similarly, the second intermediate shaft is arranged not only in the second section of the casing, but also in the first section of the casing and penetrates the central plate through the second passage opening.

The staggered intermediate shafts reduce the overall length in mixed transmission arrangements.

At least one intermediate shaft is mounted in the casing by means of a bearing. According to an embodiment of the invention at least one bearing of said at least one intermediate shaft is arranged outside the center plate. The bearings of the intermediate shafts are therefore not arranged in the central plate, but in bearing blocks of the casing which are arranged spaced from the central plate, in the region of the first or second section.

Especially, at least one bearing of the first intermediate shaft is arranged in the second section and/or at least one bearing of the second intermediate shaft is arranged in the first section. This gears of the first gear and the gears of the second gear can be arranged axially very close to each other.

For example, the input side gear stages and output-side gear stages are designed as helical gears or spur gears. According to an embodiment of the invention the first input shaft and the first output shaft are arranged parallel and axially spaced from each other in the first section of the casing. As well the second input shaft and the second output shaft are arranged parallel and axially spaced from each other in the second section of the casing.

Preferably the center plate is pinched between a first housing part and a second housing part of the casing. The housing parts on both sides of the center plate cover up the transmission arrangement to a fully closed unit, ready for stand-alone electrical machines to be assembled.

According to a further embodiment of the invention at least one bearing of a shaft selected from the group first input shaft, first output shaft, second input shaft and the second output shaft is arranged preferably in blind holes of the center plate. For example, the center plate carries the center bearings of the input and output shafts.

At least one lubricating and/or cooling channel can be arranged in the center plate. Further, the center plate can be a carrier for at least one add on component, e.g., for at least one spray nozzle for lubrication of the gears. In this way the center plate doubles as a carrier for add on components as well as distributing oil thru cross-drills, distributor nozzles, orifices, etc.

The production effort can be minimized when the first gear and the second gear are identical. The inventive solution allows a compact design with basically two identical transmission layouts to be combined.

The transmission arrangement according to the present invention is used when having two electric machines driving on one axle of a vehicle. The transmission arrangement allows for torque vectoring and differential functions by using electric machines and their motor management system. Thus, only basic transmission components are used, eliminating the need for complex ELSD components as clutches and brakes (ELSD=Electronic Limited Slip Differential).

The invention is explained below in closer detail by reference to the drawings, wherein:
- Fig. 1: is a front view of a transmission arrangement according to the state of art;
- Fig. 2: is a sectional view of a transmission arrangement according to the invention, to the line II - II in Fig. 4, including schematic power flow paths;
- Fig. 3: is a perspective view of the transmission arrangement shown in Fig. 2 without casing;
- Fig. 4: is side view of the transmission arrangement according to the arrow IV in Fig. 3;
- Fig. 5: is a front view of the transmission arrangement shown in Fig. 3 and Fig. 4;
- Fig. 6: is a front view of the transmission arrangement shown in Fig. 3 and 4, including schematic flow paths;
- Fig.7: is a sectional view of a transmission arrangement shown in Fig. 2 without casing and schematic power flow paths;

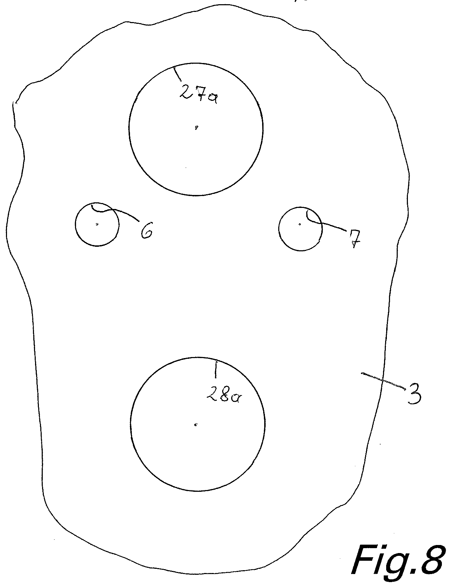

- Fig. 8: is a side view of the center plate of the transmission arrangement shown in Fig. 2; and
- Fig. 9: is a detailed sectional view of the center plate of the transmission arrangement according to the invention.

Fig. 1 shows a transmission arrangement 101 according to the state of art, with a first gear 110 and a second gear 120, wherein each of said first 110 and second gear 120 comprises an input shaft 111, 121, an output shaft 112, 122 and an intermediate shaft 113, 123. Each input shaft 111, 121 is connected to the corresponding intermediate shaft 113, 123 via an input side gear step 114, 124, each output shaft 112, 122 is connected to the corresponding intermediate shaft 113, 123 via an output side gear step 115, 125. The bearings 119, 129 of the intermediate shafts 113, 123 are arranged between the output-side gear steps 115, 125 in a center section 105 of the transmission arrangement 101. This causes a lost space 108 in the center section 105 between the gears of the output-side gear steps 115, 125 and increase the axial length of the transmission arrangement 101.

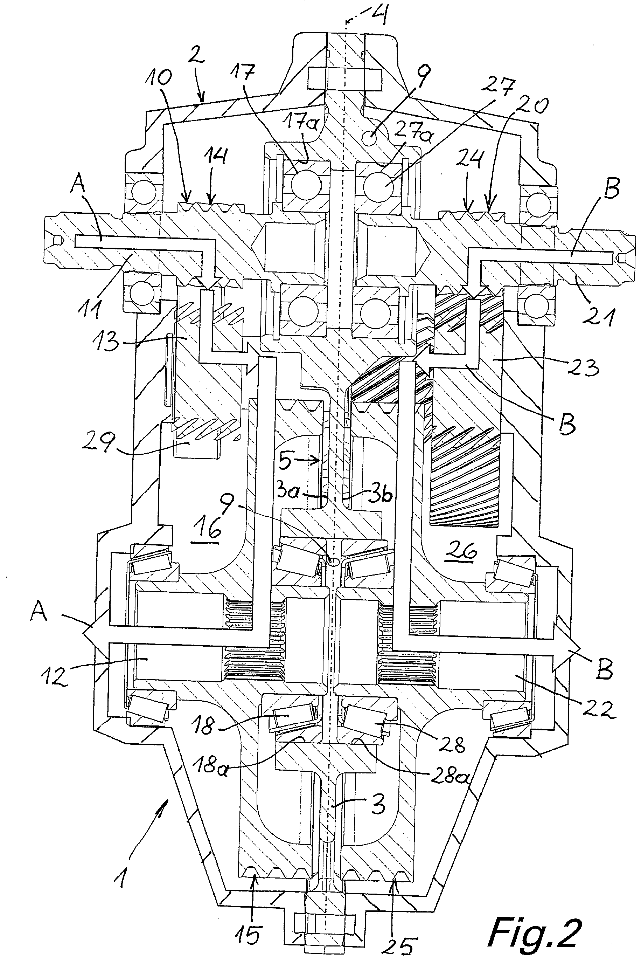

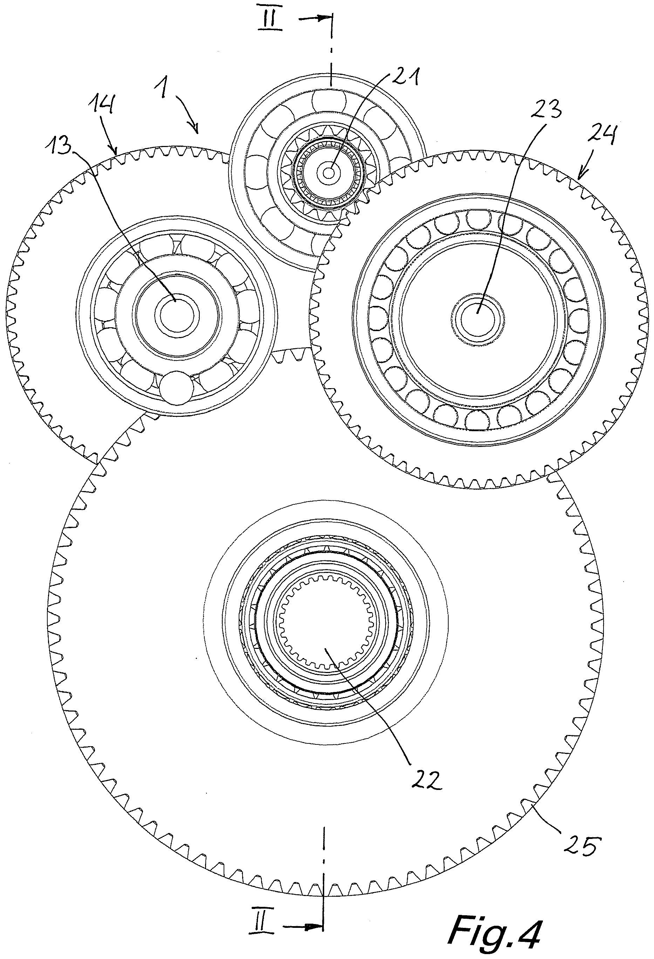

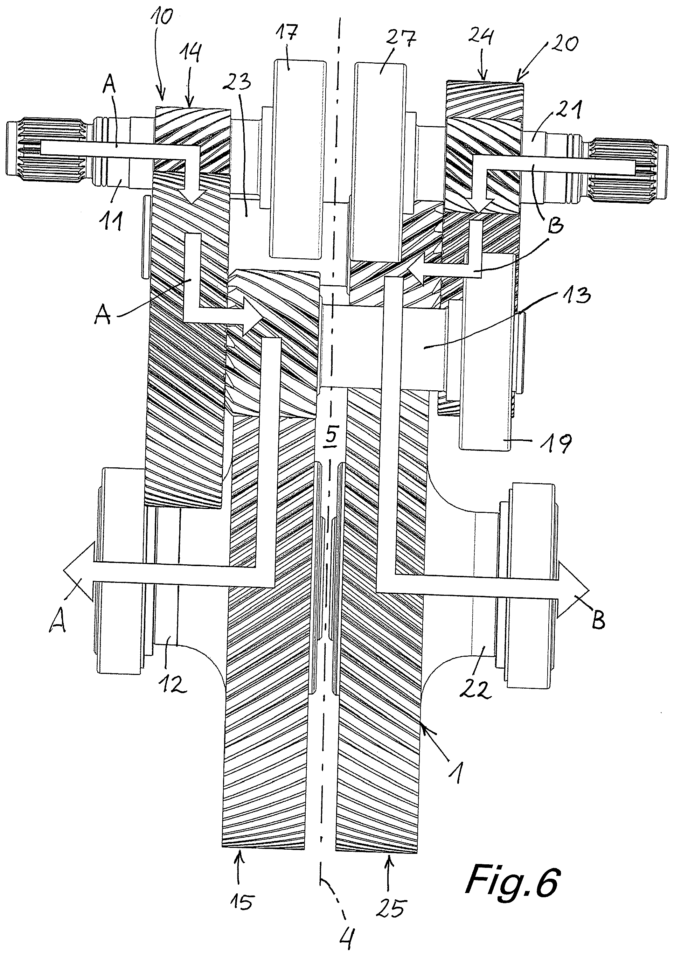

Fig. 2 to 7 show a transmission arrangement 1 for a drive system of a vehicle, for example an electric axle of an electric vehicle, according to the present invention. As shown in Fig. 2, the transmission arrangement 1 has a casing 2 including a first gear 10 for a first powerflow path A and a second gear 20 for a second power flow path B. The first gear 10 comprises a first input shaft 11, a first output shaft 12, and a first intermediate shaft 13. The first input shaft 11 and the first intermediate shaft 13 are drive connected via a first input-side gear stage 14. The first intermediate shaft 13 and the first output shaft 12 are drive connected via a first output-side gear stage 15. The first input shaft 11 and the first output shaft 12 are arranged in a first section 16 of the casing 2.

The second gear 20 comprises a second input shaft 21, a second output shaft 22 and at least one second intermediate shaft 23. The second input shaft 21 and the second intermediate shaft 23 are drive connected via a second input-side gear 24 stage. The second intermediate shaft 23 and the second output shaft 22 are drive connected via a second output-side gear stage 25. The second input shaft 21 and the second output shaft 22 are arranged in a second section 26 of the casing 2.

The casing 2 of the transmission arrangement 1 comprises a center plate 3 which is arranged in the area of the symmetry plane 4 in the center section 5. The center plate 3 is configured as partition wall between the first section 16 and the second section 26 of the casing 2. The center plate 3 separates the first power flow path A of the first gear 10 and the second power flow path B of the second gear 20. The first section 16 of the casing 2 is formed by the center plate 3 and a first housing part 2a of the casing 2. The second section 26 of the casing 2 is formed by the center plate 3 and a second housing part 2b of the casing 2. For example, the center plate 3 is arranged between the first housing part 2a and the second housing part 2b of the casing 2.

A first center bearing 17 of the first input shaft 11 and a first center bearing 18 of the first output shaft 12 are arranged in first holes 17a, 18a on a first side 3a of the center plate 3, the first side 3a facing the first section 16. A second center bearing 27 of the second input shaft 21 and a second center bearing 28 of the second output shaft 22 are arranged in second holes 27a, 28a on a second side 3b of the center plate 3, wherein the second side 3b of the center plate 3 is facing the second section 26. At least one of the first holes 17a, 18a and second holes 27a, 28a can be formed as blind hole or as passage hole.

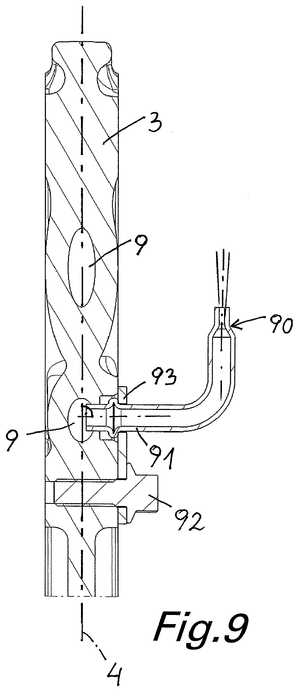

At least one lubricating or cooling channel 9 may be arranged in the center plate 3 (Fig. 2, 9). Further, the center plate 3 can be a carrier for at least one add on component, e.g., for at least one spray nozzle 90 for lubrication of the gears. Fig. 9 shows a spray nozzle 90 with a pipe 91, wherein the pipe 91 is attached with a screw 92 and a mounting plate 93 to the center plate 3. The pipe 91 is connected to an oil channel 9 drilled into the center plate 3, wherein, for example, the pipe 91 is aligned approximately normal to symmetry plane 4. The spray axis 90a of the spray nozzle is arranged parallel to the symmetry plane 4 and directed to at least one gear wheel of the gear stages 14, 15; 24, 25.

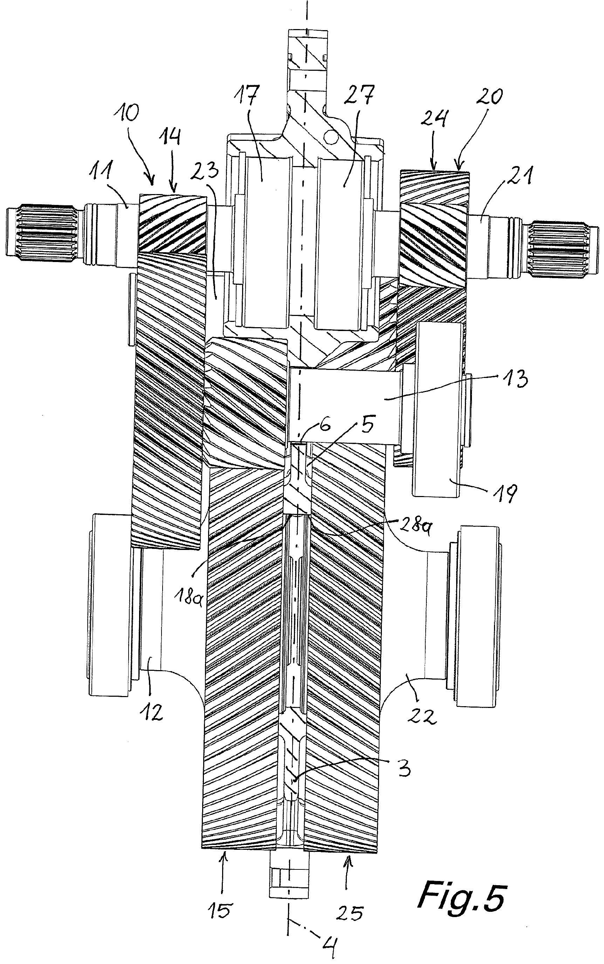

As shown in Fig. 5, 6 and 7, the first input shaft 11 and the second input shaft 21 are arranged coaxially in line, i.e. one behind the other, and symmetrically with respect to a symmetry plane 4. In a similar way the first output shaft 12 and the second output shaft 22 are arranged coaxially in line and symmetrically with respect to the symmetry plane 4. This arrangement enables a very small overall package volume. The symmetry plane 4 is arranged in a center section 5 of the transmission arrangement 1 normal to the shafts 11, 12, 13; 21, 22, 23.

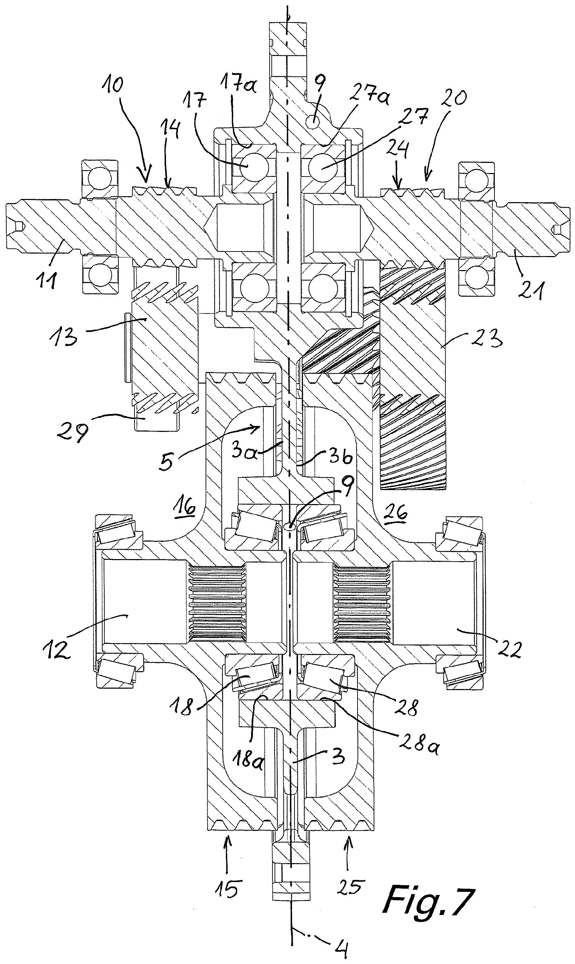

The first input shaft 11 and the first output shaft 12 are arranged parallel and axially spaced from each other in the first section 16 of the casing 2. The second input shaft 21 and the second output shaft 22 are arranged parallel and axially spaced from each other in the second section 26 of the casing 2. As shown in Fig. 7, the center plate 3 comprises a first passage 6 opening for receiving the first intermediate shaft 13 and a second passage opening 7 for receiving the second intermediate shaft 23. At least one first bearing 19 of the first intermediate shaft 13 is arranged axially next to the second output-side gear stage 25 on a side facing away from the centerplate 3. At least one second bearing 29 of the second intermediate shaft 23 is arranged axially next to the first output-side gear stage 15 on a side facing away from the centerplate 3.

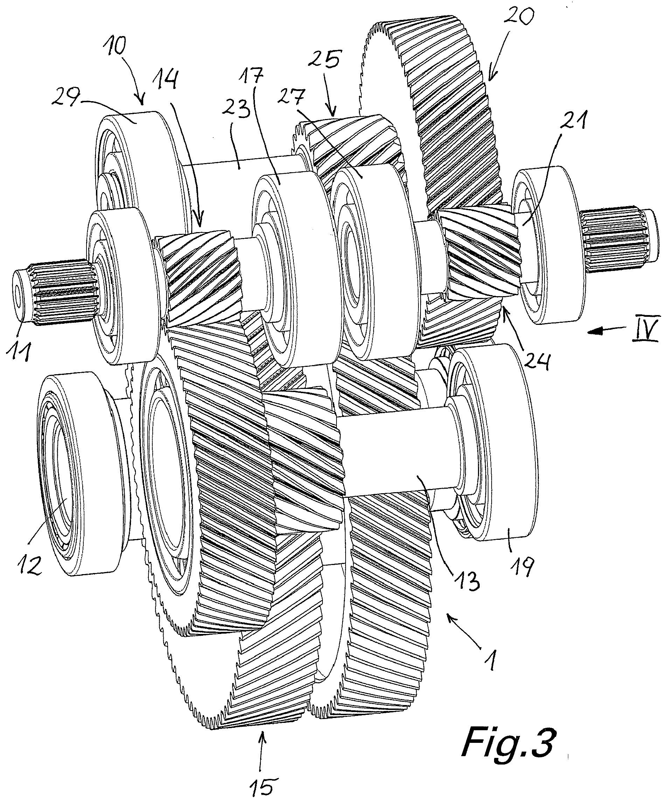

As shown in Fig. 3 to 6, the intermediate shafts 13, 23 are arranged axially staggered in the first section 16 and second section 26. Therefore, the first intermediate shaft 13 is arranged not only in the first section 16 of the casing 2, but also in the second section 26 of the casing 2 and penetrates the central plate 3 through the first passage opening 6. Similarly, the second intermediate shaft 23 is arranged not only in the second section 26 of the casing, but also in the first section 16 of the casing 2 and penetrates the central plate 3 through the second passage opening 7. The first passage opening 6 and second passage opening 7 can be formed by bores with diameters slightly larger than the diameter of the intermediate shafts 13, 23.

The staggered intermediate shafts 13, 23 reduce the overall length in mixed transmission arrangements 1.

## Claims

1. A transmission arrangement (1) for a drive system of a vehicle, especially of an electric vehicle, with a casing (2) including a first gear (10) for a first powerflow path (A) and a second gear (20) for a second power flow path (B), wherein
- the first gear (10) comprises a first input shaft (11), a first output shaft (12), and at least one first intermediate shaft (13), wherein the first input shaft (11) and the first intermediate shaft (13) are drive connected via a first input-side gear stage (14) and wherein the first intermediate shaft (13) and the first output shaft (12) are drive connected via a first output-side gear stage (15), the first input shaft (11) and the first output shaft (12) being arranged in a first section (16) of the casing (2),
- the second gear (20) comprises a second input shaft (21), a second output shaft (22) and at least one second intermediate shaft (23), wherein the second input shaft (21) and the second intermediate shaft (23) are drive connected via a second input-side gear stage (24) and wherein the second intermediate shaft (23) and the second output shaft (22) are drive connected via a second output-side gear stage (25), the second input shaft (21) and the second output shaft (22) being arranged in a second section (26) of the casing (2),
- wherein preferably the first input shaft (11) and the second input shaft (21) on the one hand and the first output shaft (12) and the second output shaft (22) on the other hand are arranged coaxially in line, and
- wherein preferably the first input shaft (11) and the second input shaft (21) and/or the first output shaft (12) and the second output shaft (12) are arranged symmetrically with respect to a symmetry plane (4) being arranged in a center section (5) of the transmission arrangement (1) normal to at least one of the shafts (11, 12, 13, 21, 22, 23),
**characterised in that** the casing (2) of the transmission arrangement (1) comprises a center plate (3) which is arranged in the center section (5) between the first section (16) and the second section (26) of the casing (2), wherein the center plate (3) separates the first power flow path (A) of the first gear (10) and the second power flow path (B) of the second gear (20) from each other.

2. The transmission arrangement (1) according to claim 1, **characterised in that** the central plate (3) is a partition wall which separates the first section (16) from the second section (26).

3. The transmission arrangement (1) according to claim 1 to 2, **characterised in that** the center plate (3) comprises at least one passage opening (6, 7) for receiving at least one intermediate shaft (13, 23).

4. The transmission arrangement (1) according to one of the claims 1 to 3, **characterised in that** the center plate (3) comprises a first passage opening (6) for receiving the first intermediate shaft (13) and a second passage opening (7) for receiving the second intermediate shaft (23).

5. The transmission arrangement (1) according to one of the claims 1 to 4, wherein at least one intermediate shaft (13, 23) is mounted in the casing (2), **characterised in that** at least one bearing (19, 29) of said at least one intermediate shaft (13, 23) is arranged outside the center plate (3).

6. The transmission arrangement (1) according to one of the claims 1 to 5, **characterised in that** at least one first bearing (19) of the first intermediate shaft (13) is arranged in the second section (26) and/or at least one second bearing (29) of the second intermediate shaft (23) is arranged in the first section (16).

7. The transmission arrangement (1) according to one of the claims 1 to 6, **characterised in that** said at least one first bearing (19) of the first intermediate shaft (13) is arranged axially next to the second output-side gear stage (25) on a side facing away from the centerplate (3) and/or at least one second bearing (29) of the second intermediate shaft (23) is arranged axially next to the first output-side gear stage (15) on a side facing away from the centerplate (3).

8. The transmission arrangement (1) according to one of the claims 1 to 7, **characterised in that** the first input shaft (11) and the first output shaft (12) are arranged parallel and axially spaced from each other in the first section (16) of the casing (2).

9. The transmission arrangement (1) according to one of the claims 1 to 8, **characterised in that** the second input shaft (21) and the second output shaft (22) are arranged parallel and axially spaced from each other in the second section (26) of the casing (2).

10. The transmission arrangement (1) according to one of the claims 1 to 9, **characterised in that** at least one bearing (17, 18, 27, 28) of a shaft selected from the group first input shaft (11), first output shaft (12), second input shaft (21) and the second output shaft (22) is arranged in the center plate (3).

11. The transmission arrangement (1) according to one of the claims 1 to 10, **characterised in that** at least one lubricating and/or cooling channel (9) is arranged in the center plate (3).

12. The transmission arrangement (1) according to one of the claims 1 to 11, **characterised in that** the center plate (3) is a carrier for at least one add on component.

13. The transmission arrangement (1) according to one of the claims 1 to 12, **characterised in that** the first section (16) of the casing (2) is formed by the center plate (3) and a first housing part (2a) of the casing (2) and the second section (26) of the casing (2) is formed by the center plate (3) and a second housing (2b) part of the casing (2).

14. The transmission arrangement (1) according to one of the claims 1 to 13, **characterised in that** the center plate (3) is arranged between a first housing part (2a) and a second housing part (2b) of the casing (2).

15. The transmission arrangement (1) according to one of the claims 1 to 14, **characterised in that** the first gear (16) and the second gear (26) are identical.
